# EUROPÄISCHE PATENTANMELDUNG

(11) **EP 0 816 179 A2**
(43) Veröffentlichungstag der Anmeldung: **07.01.1998**
(21) Anmeldenummer: 97110184.5
(22) Anmeldetag: 21.06.1997
(51) Int. Cl.: B60R 19/34

(54) **Aufpralldämpfer für Kraftfahrzeuge**

(30) Priorität: 26.06.1996 DE 19625457
(71) Anmelder: YMOS AKTIENGESELLSCHAFT Industrieprodukte, 63179 Obertshausen (DE)
(72) Erfinder: Rutsaert, Thibaud, 63857 Waldaschaff (DE); Hock, Michael, 63752 Grossostheim (DE); Morbach, Nikolaus, 63814 Mainaschaff (DE); Schmidt, Stephan, 63768 Hösbach (DE)
(74) Vertreter: Podszus, Burghart, Dipl.-Phys., Dipl.-Wirtsch.-Ing.

(57) **Zusammenfassung**

Die Erfindung betrifft einen Aufpralldämpfer (1;100) zur Energieaufnahme bei einem möglichen Front-, Heck- oder Seitenaufprall eines Kraftfahrzeuges auf ein Hindernis, wobei der Aufpralldämpfer (1;100) aus einem stranggepreßten Hohlprofil besteht, dessen Profil sich quer zur Längsachse (4) des Aufpralldämpfers (1;100) erstreckt, und wobei das Hohlprofil (1;100) eine aus mehreren Hohlkammern (8-13;101-105; 106) zusammengesetzte wabenförmige Struktur aufweist.

Um zu erreichen, daß der Aufpralldämpfer (1;100) einfach und billig herstellbar ist, und bei einem Aufprall auf ein Hindernis ein kontrollierbares Verformungsverhalten aufweist, schlägt die Erfindung vor, daß die wabenförmige Struktur mindestens zwei in Richtung der Längsachse (4) hintereinander angeordnete zylinderförmige Hohlkammern (8-13;101-105;106) umfaßt, die im Bereich ihres äußeren Umfanges fest miteinander verbunden sind.

## Beschreibung

Die Erfindung betrifft einen Aufpralldämpfer zur Energieaufnahme bei einem möglichen Front-, Heck- oder Seitenaufprall eines Kraftfahrzeuges auf ein Hindernis.

Zum Schutz der Insassen eines Fahrzeuges bei einem Front- oder Heckaufprall ist es bekannt, die an den stoßstangenseitigen Querträgern angeordneten Längsträger, die ihrerseits mit der Fahrgastzelle verbunden sind, derart auszugestalten, daß sie die durch den Aufprall freiwerdende Energie durch Verformung aufnehmen. Eine derartige Verformung kann einerseits dadurch erreicht werden, daß die Längsträger gebogen sind, wobei das beim Aufprall entstehende Biegemoment zu einer Verformung des Längsträgers führen und die Verformungsstellen durch die Wahl der Querschnitte bestimmt werden. Andererseits kann eine Verformung der Längsträger auch durch Sicken in Längsrichtung der Längsträger herbeigeführt werden.

Aufpralldämpfer der vorstehend erwähnten Art, bei denen im wesentlichen nur die Längsträger selbst den jeweiligen Aufprallträger bilden, sind relativ aufwendig herzustellen. Da die Aufprallträger auch im niedrigen Geschwindigkeitsbereich (z.B. bei 15 km/h) einen Aufprall abfangen müssen, müssen die Längsträger entsprechend häufig nach Zusammenstößen ersetzt werden, was außerordentlich zeitaufwendig und teuer ist.

Es sind ferner Aufpralldämpfer bekannt geworden (sogenannte Crashboxen), die jeweils aus einem relativ kurzen Hohlprofilteil bestehen und die zwischen den entsprechenden stoßstangenseitigen Querträgern und den dazugehörigen Längsträgern eingesetzt werden. Auch diese Hohlprofilteile werden üblicherweise aus Blechen gefertigt. Der Hohlraum des Profiles erstreckt sich bei diesen Aufpralldämpfern in Längsrichtung des Längsträgers, wobei eine Anpassung an das Aufprallverhalten des Fahrzeuges in erster Linie durch die Form des Hohlprofiles und durch die Wandstärke der Bleche erfolgt. Die Herstellung der entsprechenden Hohlprofile ist sehr aufwendig, da die Bleche ausgestanzt und dann durch Punktschweißen miteinander verbunden werden müssen. Außerdem ist eine genaue geschwindigkeitsabhängige Anpassung des Aufprallverhaltens des jeweiligen Kraftfahrzeuges mit derartigen Aufprallträgern nicht möglich.

Aus der Patentanmeldung DE 195 26 707 A1 ist ein Aufpralldämpfer bekannt, der aus einem Strangpreßprofil, vorzugsweise aus einer Aluminiumlegierung, besteht, dessen Profil sich quer zur Richtung der Längsachse des Aufpralldämpfers erstreckt (quergepreßtes Strangprofil). Ein derartiger Aufpralldämpfer ist einfach und kostengünstig durch Ablängen eines entsprechenden Profilstranges herstellbar. Durch die Orientierung des Profiles quer zur Richtung der Längsachse kann durch eine entsprechende Anzahl nebeneinander angeordneter Hohlkammern sowie durch die Formgebung des Profiles und die Wandstärke der Seitenwände und eventueller Versteifungsrippen der Aufprallträger auf das gewünschte Aufprallverhalten des Fahrzeuges, auch im niedrigen Geschwindigkeitsbereich, abgestimmt werden.

Nachteilig bei diesem Aufpralldämpfer ist vor allem, daß zu Beginn des Deformationsverlaufes bei einem Aufprall eine unerwünschte, relativ hohe Kraftspitze auftritt. Diese kann dann bereits im unteren Geschwindigkeitsbereich zu einer ungewollten Verformung der Fahrzeugstruktur zwischen Aufpralldämpfer und Fahrgastzelle führen.

Aus der DE 30 38 252 A1 ist schließlich ein stoßabsorbierendes Deformationsglied bekannt, welches im Aufprallbereich der Knie von Fahrer und Beifahrer eines Kraftfahrzeuges angeordnet wird (Kniepolster) und aus mehreren zueinander parallel angeordneten dünnwandigen Rohren besteht, die von einer dünnen Schutzhülle umgeben oder durch Bänder zusammengehalten werden.

Nachteilig bei diesem bekannten Kniepolster ist unter anderem, daß bei seiner Verwendung als Aufpralldämpfer, z.B. im Anbindungsbereich zwischen dem vorderen oder dem hinteren Querträger und den entsprechenden Längsträgern, in einem Belastungsfall die einzelnen Rohre auseinandergedrückt werden würden, was zu einer nichtreproduzierbaren Auswirkung auf das Dämpfungsverhalten derartiger stoßabsorbierender Deformationsglieder führen würde.

Der Erfindung liegt die Aufgabe zugrunde, einen Aufpralldämpfer der eingangs erwähnten Art anzugeben, der einfach und billig herstellbar ist, und der bei einem Aufprall auf ein Hindernis ein kontrollierbares Verformungsverhalten aufweist.

Diese Aufgabe wird erfindungsgemäß durch die Merkmale des Anspruchs 1 gelöst. Weitere, besonders vorteilhafte Ausgestaltungen der Erfindung offenbaren die Unteransprüche.

Die Erfindung beruht im wesentlichen auf dem Gedanken, daß der Aufpralldämpfer eine wabenförmige Struktur aufweist, die mindestens zwei in Richtung der Längsachse hintereinander angeordnete zylinderförmige Kohlkammern umfaßt, welche im Bereich ihres äußeren Umfanges fest miteinander verbunden sind.

Anders als bei bekannten Aufpralldämpfern entfallen bei dem erfindungsgemäßen Aufpralldämpfer insbesondere vertikale Profilwände zwischen den Hohlkammern bzw. zusätzliche Schutzhüllen oder Bänder.

Wie Versuche gezeigt haben, wird durch eine derartige wabenförmige Struktur mit fest miteinander verbundenen zylinderförmigen Hohlkammern überraschenderweise erreicht, daß bei einem Aufprall des Fahrzeuges auf ein Hindernis keine Kraftspitze beim Beginn der Verformung mehr auftritt, so daß ungewollte Verformungen der Fahrzeugstrukturen hinter dem Aufpralldämpfer vermieden werden.

Durch Variation von Anzahl, Länge und Querschnitt der Rippen können Energieabsorptionsvermögen und Verformungsverhalten des Aufpralldämpfers genau und spezifisch den jeweiligen Anforderungen angepaßt werden. Durch eine Abstufung der Wandstärken in Richtung der Längsachse des Aufpralldämpfers kann das Verhalten der Deformation genau kontrolliert werden (stufenweise Verformung, beginnend bei der kleinsten und endend bei der größten Wandstärke).

Als vorteilhaft hat es sich in der Praxis erwiesen, wenn der Querschnitt der jeweiligen zylinderförmigen Hohlkammern ellipsenförmig ausgebildet ist, wobei die Längsachse der jeweiligen Ellipse in Richtung der Längsachse des Aufpralldämpfers angeordnet ist. Durch eine derartige Ausgestaltung der einzelnen Hohlkammern des Aufpralldämpfers wird erreicht, daß bei gleicher Wandstärke und gleichem Materialgewicht wie bei entsprechenden kreisringförmigen Hohlkammern sich ein längerer Verformungsweg bei gleichem Kraftniveau ergibt. Dabei ist die nach einem Aufprall sich ergebende Blocklänge des entsprechenden Aufpralldämpfers für beide Hohlkammerarten gleich.

Zu ähnlichen vorteilhaften Ergebnissen gelangt man auch, wenn die zylinderförmige Hohlkammer eiförmig ausgebildet ist.

Wie sich gezeigt hat, sollte die Wandstärke der einzelnen zylinderförmigen Hohlkammern zwischen 1 und 10% des Außendurchmessers der jeweiligen Hohlkammer liegen.

Als Material für die Hohlprofile haben sich besonders Aluminium- und/oder Magnesiumlegierungen als geeignet erwiesen. Denn die entsprechenden Hohlprofile weisen ein geringes Gewicht auf, sind einfach herstellbar und besitzen eine ausreichende Festigkeit.

Weitere Einzelheiten und Vorteile der Erfindung ergeben sich aus den folgenden anhand von Figuren erläuterten Ausführungsbeispielen. Es zeigen:
- Fig.1: die perspektivische Ansicht eines ersten Ausführungsbeispieles des erfindungsgemäßen Aufpralldämpfers mit kreisringförmigen Hohlkammern sowie zwei Flanschen zum Befestigen des Aufpralldämpfers zwischen dem Querträger und dem Längsträger eines Kraftfahrzeuges;
- Fig.2: einen Längsschnitt durch ein zweites Ausführungsbeispiel des erfindungsgemäßen Aufpralldämpfers mit ellipsenförmig ausgebildeten Hohlkammern und
- Fig.3: einen Teillängsschnitt eines dritten Ausführungsbeispieles des erfindungsgemäßen Aufpralldämpfers mit eiförmig ausgebildeten Hohlkammern.

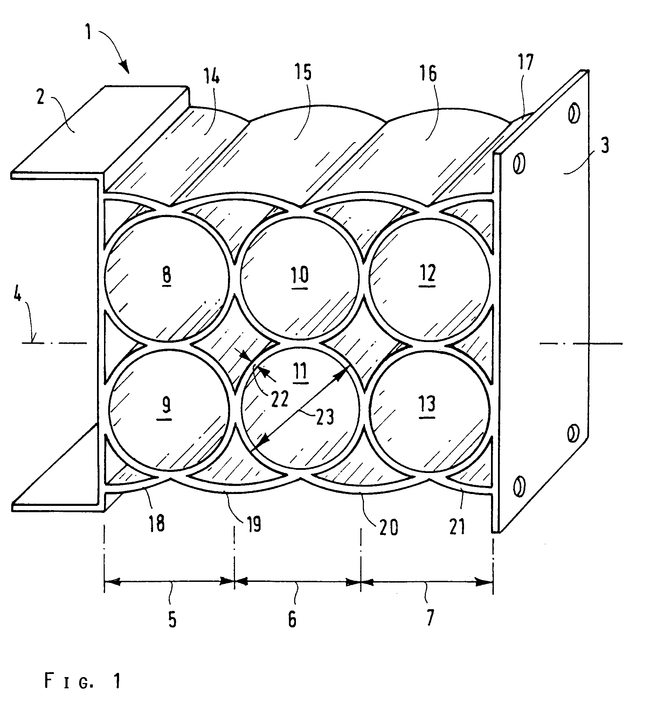

In Fig.1 ist mit 1 ein erfindungsgemäßer Aufpralldämpfer eines Kraftfahrzeuges bezeichnet, der beispielsweise zur Energieaufnahme bei einem Frontaufprall zwischen dem jeweiligen stoßstangenseitigen Querträger eines Kraftfahrzeuges und einem mit der Fahrgastzelle verbundenen Längsträger verbindbar ist. Zur Verbindung mit dem Querträger ist der Aufpralldämpfer 1 mit einem U-förmig ausgebildeten Flanschteil 2 und zur Verbindung mit dem Längsträger mit einer Flanschplatte 3 versehen.

Bei dem Aufpralldämpfer 1 handelt es sich um ein Strangpreß-Hohlprofil aus Aluminium, dessen Profil sich quer zur Längsachse 4 des Aufpralldämpfers 1 erstreckt. Das Hohlprofil besteht im wesentlichen aus drei in Richtung der Längsachse 4 hintereinander angeordneten Hohlprofilabschnitten 5-7. In jedem der drei Hohlprofilabschnitte 5-7 sind jeweils zwei zylinderförmige Hohlkammern 8-13 nebeneinander angeordnet.

Außerdem sind die zylinderförmigen Hohlkammern 8-13 außenseitig durch nach außen gewölbte Verbindungswände 14-21 miteinander verbunden.

Als vorteilhaft hat es sich ferner erwiesen, wenn die Wandstärke 22 der einzelnen zylinderförmigen Hohlkammern 8-13 zwischen 1 und 10% des Außendurchmessers 23 liegt.

Wie Messungen des Kraftverlaufes des in Fig.1 dargestellten erfindungsgemäßen Aufpralldämpfers 1 als Funktion des Deformationsweges ergeben haben, tritt bei einem Aufprall kein Kraftmaximum am Anfang der Verformung auf, so daß es -anders als bei bekannten vergleichbaren Aufpralldämpfern- zu keiner ungewollten Verformung der Fahrzeugstruktur kommt.

Bei zunehmendem Verformungsweg ergeben sich dann nacheinander gezielt abgestufte Kraftniveaus, die einer kontrollierten Verzögerung des Aufpralldämpfers 1 in bezug auf die Fahrgastzelle und damit einer kontrollierten Belastung der fahrzeugseitigen Bauteile (Strukturteile hinter den Aufpralldämpfern) entsprechen. Dabei werden die einzelnen Kammerwände nacheinander hohlprofilabschnittsweise zusammengedrückt.

Zur Auslegung des Aufpralldämpfers 1 hinsichtlich eines vorgebbaren Aufprallverhaltens, können außer der Wahl des Materials, der Kammerzahl des Profiles, der Wandstärke der Kammerwände und gegebenenfalls der Gestaltung der Verbindungswände auch der Außendurchmesser des Aufpralldämpfers verändert werden. So hat es sich bei praktischen Ausführungsbeispielen insbesonders als vorteilhaft erwiesen, wenn der Querschnitt des Strangpreßprofiles in vertikaler und/oder in horizontaler Richtung zum stoßstangenseitigen Querträger hin abnimmt.

Die Erfindung ist selbstverständlich nicht auf die vorstehend beschriebenen Ausführungsbeispiele beschränkt. So kann beispielsweise durch Einsatz von energieabsorbierenden Schäumen in den Hohlkammern ein entsprechend progressives Deformationsverhalten des jeweiligen Aufpralldämpfers erhalten werden.

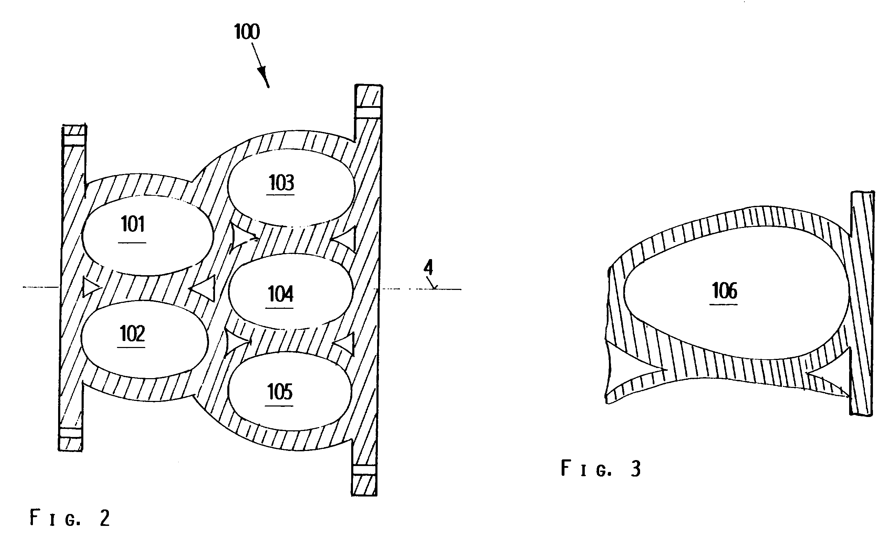

Ferner können die Hohlkammern des Aufpralldämpfers zur Verlängerung des Verformungsweges gegenüber kreisringförmigen Hohlkammern auch ellipsenförmig bzw. eiförmig ausgebildet sein, wie dieses in den Fig.2 und 3 dargestellt ist. Dabei ist die jeweilige Längsachse der Ellipsen parallel zur Richtung der Längsachse 4 des Aufpralldämpfers angeordnet.

In Fig.2 ist der entsprechende Aufpralldämpfer mit 100 und die ellipsenförmigen Hohlkammern sind mit den Bezugszeichen 101-105 bezeichnet. Die in Fig.3 wiedergegebene eiförmige Hohlkammer ist mit dem Bezugszeichen 106 gekennzeichnet.

### Bezugszeichenliste

- 1: Aufpralldämpfer, Strangpreß-Hohlprofil
- 2: Flanschteil
- 3: Flanschplatte
- 4: Längsachse
- 5-7: Hohlprofilabschnitte
- 8-13: zylinderförmige Hohlkammern
- 14-21: Verbindungswände
- 22: Wandstärke
- 23: Außendurchmesser
- 100: Aufpralldämpfer, Strangpreßprofil
- 101-105: Hohlkammern
- 106: Hohlkammer

## Patentansprüche

1. Aufpralldämpfer zur Energieaufnahme bei einem möglichen Front-, Heck- oder Seitenaufprall eines Kraftfahrzeuges auf ein Hindernis mit den Merkmalen:
a) der Aufpralldämpfer (1;100) besteht aus einem stranggepreßten Hohlprofil, dessen Profil sich quer zur Längsachse (4) des Aufpralldämpfers (1;100) erstreckt,
b) das Hohlprofil (1;100) weist eine aus mehreren Hohlkammern (8-13;101-105;106) zusammengesetzte wabenförmige Struktur auf und
c) die wabenförmige Struktur umfaßt mindestens zwei in Richtung der Längsachse (4) hintereinander angeordnete zylinderförmige Hohlkammern (8-13;101-105; 106), die im Bereich ihres äußeren Umfanges fest miteinander verbunden sind.

2. Aufpralldämpfer nach Anspruch 1, **dadurch gekennzeichnet**, daß der jeweilige Querschnitt der zylinderförmigen Hohlkammern (8-13) kreisringförmig ausgebildet ist.

3. Aufpralldämpfer nach Anspruch 1, **dadurch gekennzeichnet**, daß der jeweilige Querschnitt der zylinderförmigen Hohlkammern (101-105) ellipsenförmig ausgebildet ist, wobei die Längsachse der Ellipse in Richtung der Längsachse (4) des Aufpralldämpfers (100) angeordnet ist.

4. Aufpralldämpfer nach Anspruch 1, **dadurch gekennzeichnet**, daß der jeweilige Querschnitt der zylinderförmigen Hohlkammern (106) eiförmig ausgebildet ist, wobei die Längsachse des eiförmigen Querschnittverlaufes der jeweiligen Hohlkammer in Richtung der Längsachse (4) des Aufpralldämpfers angeordnet ist.

5. Aufpralldämpfer nach einem der Ansprüche 1 bis 4, **dadurch gekennzeichnet**, daß die randseitigen zylinderförmigen Hohlkammern (8-13) über Verbindungswände (14-21) miteinander verbunden sind.

6. Aufpralldämpfer nach Anspruch 5, **dadurch gekennzeichnet**, daß die Verbindungswände (14-21) jeweils nach außen gewölbt ausgebildet sind.

7. Aufpralldämpfer nach einem der Ansprüche 1 bis 6**, dadurch gekennzeichnet**, daß die Wandstärke (22) der jeweiligen Zylinderkammer (8-13;101-105;106) zwischen 1 und 10% des Außendurchmessers (23) der Zylinderkammer (8-13) beträgt.

8. Aufpralldämpfer nach einem der Ansprüche 1 bis 7, **dadurch gekennzeichnet**, daß die Anzahl der Hohlkammern (8-13;101-105;106), die Form, die Wandstärke und/oder das Material des Strangpreß-Hohlprofiles (1) derart gewählt sind, daß bei niedrigen Aufprallgeschwindigkeiten zunächst die dem Aufprallhindernis nächsten Kammern (8,9) und bei höheren Aufprallgeschwindigkeiten auch die in Richtung der Längsachse (4) benachbarten Kammern (10,11 bzw. 12,13) des Strangpreß-Hohlprofiles (1) zusammengedrückt werden.

9. Aufpralldämpfer nach einem der Ansprüche 1 bis 8, **dadurch gekennzeichnet**, daß der Aufpralldämpfer (1;100) auf seiner Vorder- und Rückseite integrierte Befestigungsflansche (2,3) besitzt.

10. Aufpralldämpfer nach einem der Ansprüche 1 bis 9, **dadurch gekennzeichnet**, daß mindestens ein Teil der Hohlkammern (8-13;101-105) des Aufpralldämpfers (1;100) mit einem energieaufnehmenden Schaum ausgefüllt ist.

11. Aufpralldämpfer nach einem der Ansprüche 1 bis 10, **dadurch gekennzeichnet**, daß der Aufpralldämpfer (1;100) zur Energieaufnahme bei einem möglichen Front- und/oder Heckaufprall zwischen dem jeweiligen stoßstangenseitigen Querträger und dem jeweiligen mit der Fahrgastzelle des entsprechenden Fahrzeuges verbundenen Längsträger befestigt ist.

12. Aufpralldämpfer nach einem der Ansprüche 1 bis 11, **dadurch gekennzeichnet**, daß die Wandstärken der dem stoßstangenseitigen Querträger benachbarten Hohlkammern (8,9) am kleinsten sind und in Richtung der Längsachse (4) des Aufpralldämpfers (1) zunehmen.

13. Aufpralldämpfer nach Anspruch 11, **dadurch gekennzeichnet**, daß der Querschnitt des Strangpreßprofiles in vertikaler und/oder in horizontaler Richtung zum stoßstangenseitigen Querträger hin abnimmt.

14. Aufpralldämpfer nach einem der Ansprüche 1 bis 13, **dadurch gekennzeichnet**, daß das Strangpreßprofil (1;100) aus einer Aluminium- oder Magnesiumlegierung besteht.
